(19) Europäisches Patentamt
European Patent Office
Office européen des brevets

(11) EP 3 584 742 A1

(12) EUROPEAN PATENT APPLICATION

(43) Date of publication:
25.12.2019 Bulletin 2019/52

(51) Int Cl.:
G06K 9/00 (2006.01)       G06K 9/46 (2006.01)
G06K 9/62 (2006.01)       G06K 9/32 (2006.01)

(21) Application number: 18190801.3

(22) Date of filing: 24.08.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.06.2018 IN 201821022933

(71) Applicant: KPIT Technologies Ltd.
Pune, Maharashtra 411057 (IN)
(72) Inventors:
• V, Aswin Kumar
  411057 Maharashtra (IN)
• MANKAR, Prafull
  411057 Maharashtra (IN)
• DWIVEDI, Manoj
  411057 Maharashtra (IN)
• MUSHIGERI, Sumanth
  411057 Maharashtra (IN)

(74) Representative: Rees, Kerry
WP Thompson
138 Fetter Lane
London EC4A 1BT (GB)

(54) **SYSTEM AND METHOD FOR TRAFFIC SIGN RECOGNITION**

(57) According to an aspect of the present disclosure, a traffic sign recognition system implemented in a vehicle receives one or more image frames from an image sensor and defines a Region of Interest (ROI) for each image frame, and wherein each ROI is resized to at least a first resolution image and a second resolution image; detects a circular object in the ROI of each image frame based on determination of points of symmetry by analyzing gradient values of respective pixels of a horizontal edge image and a vertical edge image, the horizontal edge image and the vertical edge image being obtained from each of the first resolution image and the second resolution image; and detects at least one speed limit traffic sign based on the detected circular object using one or more classifiers using a Convolutional Neural Network (CNN).

FIG. 1

EP 3 584 742 A1

Description

## TECHNICAL FIELD

The present disclosure relates to the field of image processing. More particularly, the present disclosure relates to a system and method for recognition of traffic signs.

## BACKGROUND

With increasing human population, numbers of vehicles have also increased significantly. Such increase in number of vehicles has led to a considerable increase in number of accidents. Numerous reasons for increase in number of accidents can be traced back to driver of a vehicle. Mostly, accidents occur due to inappropriate speed of the vehicle because of ignorance, negligence, lack of concentration, recklessness or mere error of judgment on part of the vehicle driver. The accidents which depend on human controlled factors can be reduced with the help of early warnings provided by implementation of systems that can detect and recognize traffic signs. Traffic sign recognition may be based on the characteristic shapes and colours of the traffic signs, which are rigidly positioned in order to remain in clear sight of the driver.

Existing solutions for detection of traffic signs utilize several techniques based on image processing. Some of these techniques rely on grey scale data of images, while other techniques use color information. An existing technique utilizes a two-step strategy, where firstly, pre-segmentation is employed by a thresholding operation on a color representation, such as Red Green Blue (RGB) and linear or non-linear transformations of the RGB representation is performed. Subsequently, a final detection decision is obtained from shape based features, applied only to the pre-segmented regions. Further, corner and edge features, genetic algorithms and template matching are used. However, use of the above technique increases computational load upon the system as more processing power is required, which in turn effects the overall performance of the system. Another existing technique that utilizes fixed thresholds in color based segmentation may prove to be inefficient since colors vary with daylight and reflectance.

There is therefore need in the art to develop a system and method for recognition of traffic signs, especially speed limit traffic signs that overcome the above-mentioned and other limitations of the existing solutions and utilize techniques, which are robust, accurate, fast, efficient and simple.

## OBJECTS OF THE PRESENT DISCLOSURE

Some of the objects of the present disclosure, which at least one embodiment herein satisfies are as listed herein below.

It is an object of the present disclosure to provide a system and method for recognition of traffic signs.

It is an object of the present disclosure to provide a system and method for recognition of traffic signs, whose performance is minimally influenced by change in lighting conditions.

It is an object of the present disclosure to provide a system and method for recognition of traffic signs that utilizes techniques, which minimizes computational load on processor.

It is an object of the present disclosure to provide a system and method for recognition of traffic signs, which has a self learning capability.

It is an object of the present disclosure to provide a system and method for recognition of traffic signs, which enables filtering of spurious circular objects that may be formed in bushes and trees such that only genuine circular objects are processed.

## SUMMARY

The present disclosure relates to the field of image processing. More particularly, the present disclosure relates to a system and method for recognition of traffic signs.

According to an aspect of the present disclosure, a traffic sign recognition system implemented in a vehicle comprises an image sensor for imaging field of view of a vehicle driver; and a processor coupled with a memory, the memory storing instructions executable by the processor to: receive one or more image frames from the image sensor and define a Region of Interest (ROI) for each image frame, of a set of image frames selected from said received one or more image frames, wherein the ROI is defined based on a section of each image frame, and wherein each ROI is resized to at least a first resolution image and a second resolution image; detect a circular object in the ROI of each image frame based on determination of points of symmetry by analyzing gradient values of respective pixels of a horizontal edge image and a vertical edge image, the horizontal edge image and the vertical edge image being obtained from each of the first resolution image and the second resolution image; and detect at least one speed limit traffic sign based on the detected circular object using one or more classifiers using a Convolutional Neural Network (CNN).

In an embodiment, the processor classifies and filters-out at least one false positive object contained in at least one image frame of the set of image frames, using a multi-stage pre-classifier.

In an embodiment, the processor tracks the detected circular object based on determination of a state by analyzing detection of said circular object in each image frame of the set of image frames.

In an embodiment, the state is any of an idle state, a pre-track state, a tracking state and a cancel state, and wherein the state is changed from a first state to a second state based on detection of the circular object in one or more consecutive image frames of the set of image frames.

In an embodiment, a filter is utilized in the tracking state to estimate and update position of the detected circular object in the one or more consecutive image frames of the set of image frames.

In an embodiment, the first resolution image pertains to half of resolution of the ROI for effective detection of the at least one speed limit traffic sign in a far region and the second resolution image pertains to quarter of resolution of the ROI for effective detection of the at least one speed limit traffic sign in a near region.

In an embodiment, the processor detects the circular object by a multi-scale multi-radius circular object detector, and wherein said multi-scale multi-radius circular object detector utilizes a voting technique for one or more pre-defined radii for each of the first resolution image and the second resolution image, wherein the voting technique is based on gradient values of the respective pixels.

In an embodiment, the multi-scale multi-radius circular object detector facilitates detection using multiple scales with overlapping radii, of the one or more pre-defined radii, in order to effectively detect the circular object and minimize processing load.

In an embodiment, the voting technique is performed for at least one radius of the one or more pre-defined radii, by: obtaining gradient values of the respective pixels, each gradient value comprising a gradient magnitude and a gradient direction; determining at least two gradient affected points comprising a positively affected point and a negatively affected point, the positively affected point being at a distance of the at least one radius along direction of gradient from a center point and the negatively affected point being at a distance of the at least one radius opposite to direction of gradient at the center point; incrementing a vote value based on gradient direction at each of the positively affected point and the negatively affected point of the at least two gradient affected points; and adding gradient magnitude of the center point to each of the positively affected point and the negatively affected point.

In an embodiment, the processor recognizes and labels the detected at least one speed limit traffic sign.

According to another aspect of the present disclosure a method, carried out according to instructions stored in a computer implemented in a vehicle, comprises: receiving one or more image frames from an image sensor operatively coupled with the vehicle and defining a Region of Interest (ROI) for each image frame of a set of image frames selected from said received one or more image frames, wherein the ROI is defined based on a section of each image frame, and wherein each ROI is resized to at least a first resolution image and a second resolution image; detecting a circular object in the ROI of each image frame based on determination of points of symmetry by analyzing gradient values of respective pixels of a horizontal edge image and a vertical edge image, the horizontal edge image and the vertical edge image being obtained from each of the first resolution image and the second resolution image; and detecting at least one speed limit traffic sign based on the detected circular object using one or more classifiers comprising a Convolutional Neural Network (CNN).

Various objects, features, aspects and advantages of the present disclosure will become more apparent from the following detailed description of preferred embodiments, along with the accompanying drawing figures in which like numerals represent like features.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

## BRIEF DESCRIPTION OF DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.

FIG. 1 illustrates an exemplary architecture of a traffic sign recognition system to illustrate its overall working in accordance with an embodiment of the present disclosure.

FIG. 2 illustrates exemplary modules of a processing unit in accordance with an embodiment of the present disclosure.

FIG. 3 illustrates overall working of a pre-processing module in accordance with an embodiment of the present disclosure.

FIGs. 4A-I illustrate exemplary implementations of circular object detection module in accordance with an embodiment of the present disclosure.

FIGs. 5A-I illustrate exemplary implementations of pre-classification module in accordance with an embodiment of the present disclosure.

FIG. 6 illustrates an exemplary implementation of a tracking module in accordance with an embodiment of the present disclosure.

FIGs. 7A-B illustrates exemplary implementations of a traffic sign classification module in accordance with an embodiment of the present disclosure.

FIG. 8 illustrates a high-level flow diagram representing exemplary working of the proposed system in accordance with an embodiment of the present disclosure.

FIG. 9 illustrates a method of working of proposed system in accordance with an exemplary embodiment of the present disclosure.

## DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

Embodiments of the present invention include various steps, which will be described below. The steps may be performed by hardware components or may be embodied in machine-executable instructions, which may be used to cause a general-purpose or special-purpose processor programmed with the instructions to perform the steps. Alternatively, steps may be performed by a combination of hardware, software, and firmware and/or by human operators.

Various methods described herein may be practiced by combining one or more machine-readable storage media containing the code according to the present invention with appropriate standard computer hardware to execute the code contained therein. An apparatus for practicing various embodiments of the present invention may involve one or more computers (or one or more processors within a single computer) and storage systems containing or having network access to computer program(s) coded in accordance with various methods described herein, and the method steps of the invention could be accomplished by modules, routines, subroutines, or subparts of a computer program product.

If the specification states a component or feature "may", "can", "could", or "might" be included or have a characteristic, that particular component or feature is not required to be included or have the characteristic.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

Exemplary embodiments will now be described more fully hereinafter with reference to the accompanying drawings, in which exemplary embodiments are shown. These exemplary embodiments are provided only for illustrative purposes and so that this disclosure will be thorough and complete and will fully convey the scope of the invention to those of ordinary skill in the art. The invention disclosed may, however, be embodied in many different forms and should not be construed as limited to the embodiments set forth herein. Various modifications will be readily apparent to persons skilled in the art. The general principles defined herein may be applied to other embodiments and applications without departing from the spirit and scope of the invention. Moreover, all statements herein reciting embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure). Also, the terminology and phraseology used is for the purpose of describing exemplary embodiments and should not be considered limiting. Thus, the present invention is to be accorded the widest scope encompassing numerous alternatives, modifications and equivalents consistent with the principles and features disclosed. For purpose of clarity, details relating to technical material that is known in the technical fields related to the invention have not been described in detail so as not to unnecessarily obscure the present invention.

Thus, for example, it will be appreciated by those of ordinary skill in the art that the diagrams, schematics, illustrations, and the like represent conceptual views or processes illustrating systems and methods embodying this invention. The functions of the various elements shown in the figures may be provided through the use of dedicated hardware as well as hardware capable of executing associated software. Similarly, any switches shown in the figures are conceptual only. Their function may be carried out through the operation of program logic, through dedicated logic, through the interaction of program control and dedicated logic, or even manually, the particular technique being selectable by the entity implementing this invention. Those of ordinary skill in the art further understand that the exemplary hardware, software, processes, methods, and/or operating systems described herein are for illustrative purposes and, thus, are not intended to be limited to any particular named element.

Embodiments of the present invention may be provided as a computer program product, which may include a machine-readable storage medium tangibly embodying thereon instructions, which may be used to program a computer (or other electronic devices) to perform a process. The term "machine-readable storage medium" or "computer-readable storage medium" includes, but is not limited to, fixed (hard) drives, magnetic tape, floppy diskettes, optical disks, compact disc read-only memories (CD-ROMs), and magneto-optical disks, semiconductor memories, such as ROMs, PROMs, random access memories (RAMs), programmable read-only memories (PROMs), erasable PROMs (EPROMs), electrically erasable PROMs (EEPROMs), flash memory, magnetic or optical cards, or other type of media/machine-readable medium suitable for storing electronic instructions (e.g., computer programming code, such as software or firmware).A machine-readable medium may include a non-transitory medium in which data may be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-program product may include code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

Furthermore, embodiments may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a machine-readable medium. A processor(s) may perform the necessary tasks.

Systems depicted in some of the figures may be provided in various configurations. In some embodiments, the systems may be configured as a distributed system where one or more components of the system are distributed across one or more networks in a cloud computing system.

Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims.

All methods described herein may be performed in any suitable order unless otherwise indicated herein or otherwise clearly contradicted by context. The use of any and all examples, or exemplary language (e.g., "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

Various terms as used herein are shown below. To the extent a term used in a claim is not defined below, it should be given the broadest definition persons in the pertinent art have given that term as reflected in printed publications and issued patents at the time of filing.

The present disclosure relates to the field of image processing. More particularly, the present disclosure relates to a system and method for recognition of traffic signs.

According to an aspect of the present disclosure, a traffic sign recognition system implemented in a vehicle comprises an image sensor for imaging field of view of a vehicle driver; and a processor coupled with a memory, the memory storing instructions executable by the processor to: receive one or more image frames from the image sensor and define a Region of Interest (ROI) for each image frame, of a set of image frames selected from said received one or more image frames, wherein the ROI is defined based on a section of each image frame, and wherein each ROI is resized to at least a first resolution image and a second resolution image; detect a circular object in the ROI of each image frame based on determination of points of symmetry by analyzing gradient values of respective pixels of a horizontal edge image and a vertical edge image, the horizontal edge image and the vertical edge image being obtained from each of the first resolution image and the second resolution image; and detect at least one speed limit traffic sign based on the detected circular object using one or more classifiers using a Convolutional Neural Network (CNN).

In an embodiment, the processor classifies and filters-out at least one false positive object contained in at least one image frame of the set of image frames, using a multi-stage pre-classifier.

In an embodiment, the processor tracks the detected circular object based on determination of a state by analyzing detection of said circular object in each image frame of the set of image frames.

In an embodiment, the state is any of an idle state, a pre-track state, a tracking state and a cancel state, and wherein the state is changed from a first state to a second state based on detection of the circular object in one or more consecutive image frames of the set of image frames.

In an embodiment, a filter is utilized in the tracking state to estimate and update position of the detected circular object in the one or more consecutive image frames of the set of image frames.

In an embodiment, the first resolution image pertains to half of resolution of the ROI for effective detection of the at least one speed limit traffic sign in a far region and the second resolution image pertains to quarter of resolution of the ROI for effective detection of the at least one speed limit traffic sign in a near region.

In an embodiment, the processor detects the circular object by a multi-scale multi-radius circular object detector, and wherein said multi-scale multi-radius circular object detector utilizes a voting technique for one or more pre-defined radii for each of the first resolution image and the second resolution image, wherein the voting technique is based on gradient values of the respective pixels.

In an embodiment, the multi-scale multi-radius circular object detector facilitates detection using multiple scales with overlapping radii, of the one or more pre-defined radii, in order to effectively detect the circular object and minimize processing load.

In an embodiment, the voting technique is performed for at least one radius of the one or more pre-defined radii, by: obtaining gradient values of the respective pixels, each gradient value comprising a gradient magnitude and a gradient direction; determining at least two gradient affected points comprising a positively affected point and a negatively affected point, the positively affected point being at a distance of the at least one radius along direction of gradient from a center point and the negatively affected point being at a distance of the at least one radius opposite to direction of gradient at the center point; incrementing a vote value based on gradient direction at each of the positively affected point and the negatively affected point of the at least two gradient affected points; and adding gradient magnitude of the center point to each of the positively affected point and the negatively affected point.

In an embodiment, the processor recognizes and labels the detected at least one speed limit traffic sign.

According to another aspect of the present disclosure a method, carried out according to instructions stored in a computer implemented in a vehicle, comprises: receiving one or more image frames from an image sensor operatively coupled with the vehicle and defining a Region of Interest (ROI) for each image frame of a set of image frames selected from said received one or more image frames, wherein the ROI is defined based on a section of each image frame, and wherein each ROI is resized to at least a first resolution image and a second resolution image; detecting a circular object in the ROI of each image frame based on determination of points of symmetry by analyzing gradient values of respective pixels of a horizontal edge image and a vertical edge image, the horizontal edge image and the vertical edge image being obtained from each of the first resolution image and the second resolution image; and detecting at least one speed limit traffic sign based on the detected circular object using one or more classifiers comprising a Convolutional Neural Network (CNN).

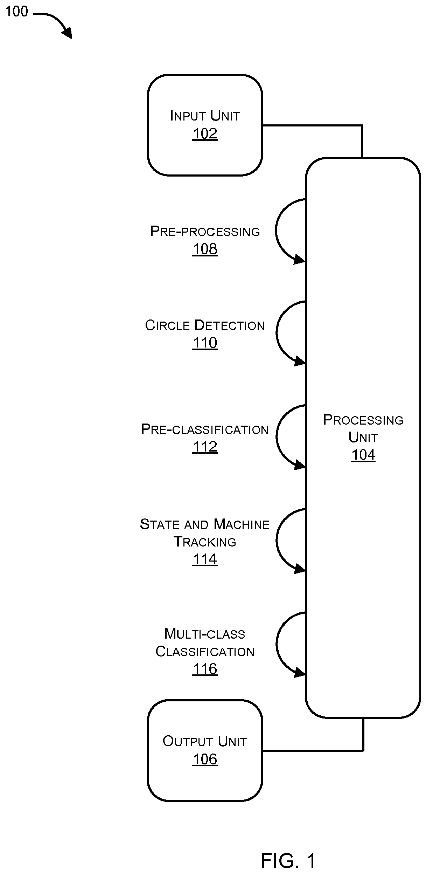

FIG. 1 illustrates architecture of a traffic sign recognition system to illustrate its overall working in accordance with an embodiment of the present disclosure.

According to an embodiment, a traffic sign recognition system 100 (interchangeably referred to as system 100, hereinafter) is implemented in a vehicle. The system 100 comprises an input unit 102, a processing unit 104 and an output unit 106. The input unit 102 may comprise one or more image sensors or cameras configured in a vehicle to capture images of field of view of the vehicle. In an implementation, the image sensors or the cameras may be placed on external mirror position or in front portion of the vehicle. The processing unit 104 may comprise a processor and a memory and/or may be integrated with existing systems and controls of a vehicle to form an advanced driver assistance system (ADAS), or augment an existing ADAS. For instance, signals generated by the processing unit 104 may be sent to engine control unit (ECU) of the vehicle and may aid in parking of the vehicle. The output unit 106 may be a display device or any other audio-visual device that provides warning to the driver when he/she exceeds a speed limit based on detection and recognition of various speed limit traffic signs.

According to an embodiment, during pre-processing 108, the processing unit 104 receives one or more image frames from the image sensor of the input unit 102 and defines a Region of Interest (ROI) for each image frame, of a set of image frames selected from said received one or more image frames. The ROI is defined based on a section of each image frame and each ROI is resized to at least a first resolution image and a second resolution image.

In an embodiment, the first resolution image pertains to half of resolution of the ROI for effective detection of at least one speed limit traffic sign in a far region and the second resolution image pertains to quarter of resolution of the ROI for effective detection of the at least one speed limit traffic sign in a near region.

In an embodiment, during circle detection 110, the processing unit 104 detects a circular object in the ROI of each image frame based on determination of points of symmetry by analyzing gradient values of respective pixels of a horizontal edge image and a vertical edge image. The horizontal edge image and the vertical edge image are obtained from each of the first resolution image and the second resolution image.

In an embodiment, the processing unit 104 detects the circular object by a multi-scale multi-radius circular object detector that utilizes a voting technique for one or more pre-defined radii for each of the first resolution image and the second resolution image that is based on gradient values of the respective pixels. The multi-scale multi-radius circular object detector facilitates detection using multiple scales with overlapping radii, of the one or more pre-defined radii, in order to effectively detect the circular object and minimize processing load.

In an embodiment, the voting technique is performed for at least one radius of the one or more pre-defined radii, by: obtaining gradient values of the respective pixels, each gradient value comprising a gradient magnitude and a gradient direction; determining at least two gradient affected points comprising a positively affected point and a negatively affected point, the positively affected point being at a distance of the at least one radius along direction of gradient from a center point and the negatively affected point being at a distance of the at least one radius opposite to direction of gradient at the center point; incrementing a vote value based on gradient direction at each of the positively affected point and the negatively affected point of the at least two gradient affected points; and adding gradient magnitude of the center point to each of the positively affected point and the negatively affected point.

In an embodiment, during pre-classification 112, the processing unit 104 classifies and filters-out at least one false positive object contained in at least one image frame of the set of image frames, using a multi-stage pre-classifier.

In an embodiment, during state and machine tracking 114, the processing unit 104 tracks the detected circular object based on determination of a state by analyzing detection of said circular object in each image frame of the set of image frames. The state may be any of an idle state, a pre-track state, a tracking state and a cancel state that is changed based on detection of the circular object in one or more consecutive image frames of the set of image frames. Further, a filter is utilized in the tracking state to estimate and update position of the detected circular object in the one or more consecutive image frames of the set of image frames.

In an embodiment, during multi-class classification 116, the processing unit 104detects at least one speed limit traffic sign based on the detected circular object by one or more classifiers using a Convolutional Neural Network (CNN).

In an embodiment, the processing unit 104 recognizes and labels the detected at least one speed limit traffic sign such that an appropriate warning can be produced by the output unit 106 in response to over-speeding by the vehicle.

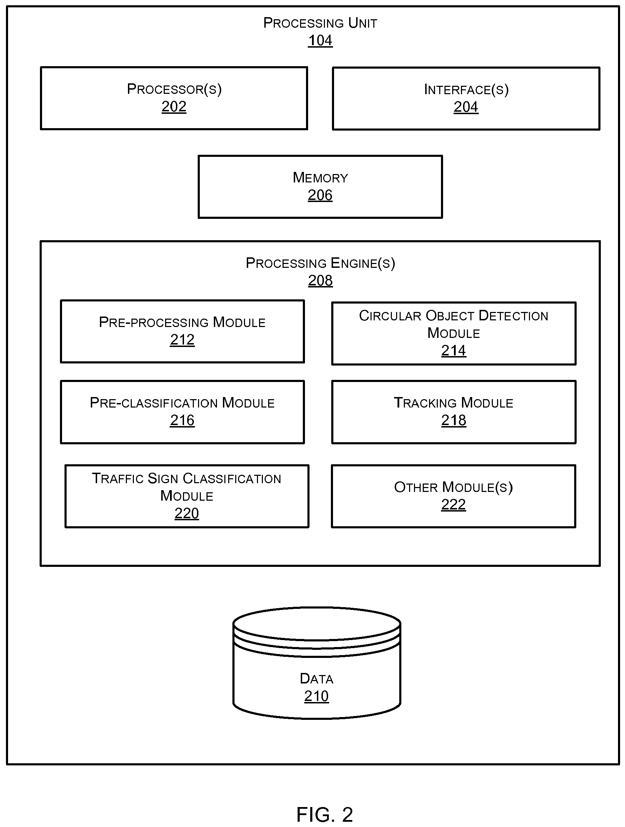

FIG. 2 illustrates exemplary modules of a processing unit in accordance with an embodiment of the present disclosure.

In an aspect, the processing unit 104 may comprise one or more processor(s) 202. The one or more processor(s) 202 may be implemented as one or more microprocessors, microcomputers, microcontrollers, digital signal processors, central processing units, logic circuitries, and/or any devices that manipulate data based on operational instructions. Among other capabilities, the one or more processor(s) 202 are configured to fetch and execute computer-readable instructions stored in a memory 206 of the processing unit 104. The memory 206 may store one or more computer-readable instructions or routines, which may be fetched and executed to create or share the data units over a network service. The memory 206 may comprise any non-transitory storage device including, for example, volatile memory such as RAM, or nonvolatile memory such as EPROM, flash memory, and the like.

The processing unit 104 may also comprise an interface(s) 204. The interface(s) 204 may comprise a variety of interfaces, for example, interfaces for data input and output devices, referred to as I/O devices, storage devices, and the like. The interface(s) 204 may facilitate communication of processing unit 104 with various devices coupled to the processing unit 104 such as the input unit 102 and the output unit 106. The interface(s) 204 may also provide a communication pathway for one or more components of the processing unit 104. Examples of such components include, but are not limited to, processing engine(s) 208 and data 210.

The processing engine(s) 208 may be implemented as a combination of hardware and programming (for example, programmable instructions) to implement one or more functionalities of the processing engine(s) 208. In examples described herein, such combinations of hardware and programming may be implemented in several different ways. For example, the programming for the processing engine(s) 208 may be processor executable instructions stored on a non-transitory machine-readable storage medium and the hardware for the processing engine(s) 208 may comprise a processing resource (for example, one or more processors), to execute such instructions. In the present examples, the machine-readable storage medium may store instructions that, when executed by the processing resource, implement the processing engine(s) 208. In such examples, the processing unit 104 may comprise the machine-readable storage medium storing the instructions and the processing resource to execute the instructions, or the machine-readable storage medium may be separate but accessible to processing unit 104 and the processing resource. In other examples, the processing engine(s) 208 may be implemented by electronic circuitry.

The data 210 may comprise data that is either stored or generated as a result of functionalities implemented by any of the components of the processing engine(s) 208.

In an exemplary embodiment, the processing engine(s) 208 may comprise a pre-processing module 212, a circular object detection module 214, a pre-classification module 216, a tracking module 218, a traffic sign classification module 218, and other module(s) 222.

It would be appreciated that modules being described are only exemplary modules and any other module or sub-module may be included as part of the system 100 or the processing unit 104. These modules too may be merged or divided into super-modules or sub-modules as may be configured.

**Pre-processing Module 212**

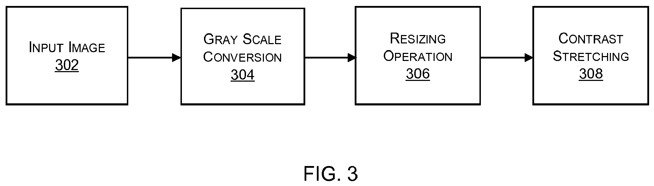

FIG. 3 illustrates overall working of the pre-processing module 212 in accordance with an embodiment of the present disclosure. In an aspect, at block 302, the pre-processing module 212 receives one or more image frames from the image sensor of the input unit 102. At block 304, the received image frames may be converted into gray scale for further processing.

Further at block 306, the pre-processing module 212 defines an ROI for each image frame of a set of image frames that is selected from said received one or more image frames. Those skilled in the art would appreciate that based on experimental observations, it has been inferred that most of the traffic speed signs occurs in upper portion of an image. Therefore, according to an embodiment of the present disclosure, the pre-processing module 212 defines the ROI based on a section of each image frame. For example, the ROI for each image frame may be defined to cover upper 35% of image rows and all columns of the image frame. The defined ROI may then be utilized by other modules for further processing.

In an embodiment, the defined ROI is resized to at least a first resolution image and a second resolution image. The first resolution image pertains to half of resolution of the ROI for effective detection of the at least one speed limit traffic sign in a far region of field of view of the vehicle and the second resolution image pertains to quarter of resolution of the ROI for effective detection of the at least one speed limit traffic sign in a near region of field of view of the vehicle. It would be appreciated that the ROI portion of the image is resized to half and quarter of its total size to ensure faster processing of the image frames. The working of the resizing operation block 306 may be clear by considering an example, for example, an input image frame of dimensions (1280X960) is provided to the pre-processing module 212, the pre-processing module 212 may consider an ROI of dimension (1280X336) containing all columns and upper rows from the input image frame. Further, the pre-processing module 212 may resize the ROI to the first resolution that may be a half resolution e.g. (640X168) and the second resolution that may be a quarter of resolution e.g. (320x84). The first resolution image and the second resolution image may then be utilized for further processing.

In an embodiment, in order to ensure faster processing, the pre-processing module 212 performs contrast stretching at block 308, which is an efficient as well as a computationally cheap technique implemented to enhance image quality.

Those skilled in the art would appreciate that the pre-processing module 212focuses on enhancement and performs certain operations on the input image frames to ensure that processing in subsequent stages though implementation of various other modules is performed in less computational time. The pre-processing module212 also plays a vital role in ensuring detections for most of the traffic speed signs especially in bad weather. The enhancement of image frames is further optimized to stay free from floating point operations.

**Circular object detection module 214**

In an embodiment, the circular object detection module 214 utilizes a multi-scale multi-radius circular object detector to detect a circular object in the ROI of each image frame based on determination of points of symmetry by analyzing gradient values of respective pixels of a horizontal edge image and a vertical edge image, which are obtained from each of the first resolution image and the second resolution image.

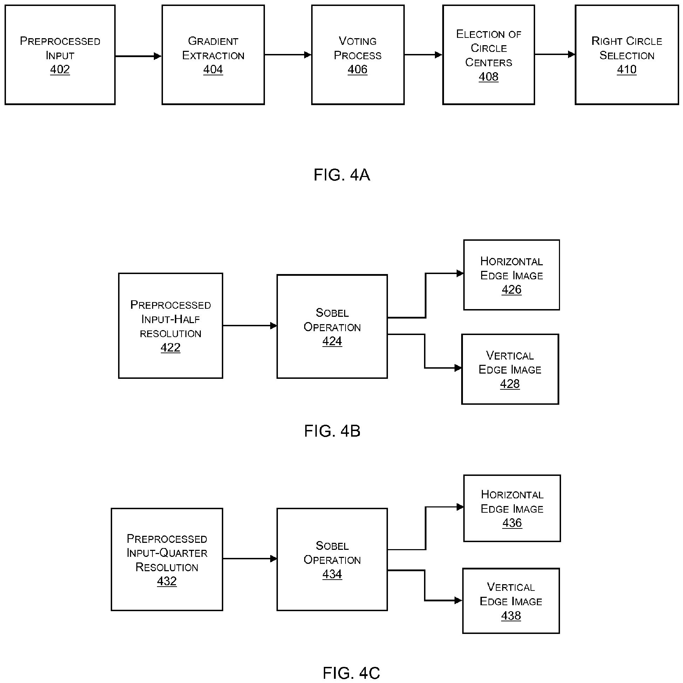

FIG. 4A illustrates a block diagram representing exemplary working of the circular object detection module 214.

At block 402, the circular object detection module 214 receives an input from the pre-processing module 212. At block 404, a process for gradient extraction is performed by obtaining gradient information of the image frames. FIG. 4B and 4C illustrate block diagrams representing an exemplary gradient extraction process. Referring to FIG. 4B, at block 422, preprocessed first resolution image is taken as input. At block 424, a modified Sobel operator is used to extract well pronounced edges from the first resolution image. Thus, edges along both directions are obtained with values of both magnitude and direction such that output of the gradient extraction process is a horizontal edge image 426 and a vertical edge image 428. Similarly, block diagram of FIG. 4C illustrates use of Sobel operation at block 434 to obtain horizontal edge image at block 436 and vertical edge image at block 438 from the second resolution image at block 432.

In an embodiment at block 406, the circular object detection module 212 performs a voting process/technique for one or more pre-defined radii for each of the first resolution image and the second resolution image. The voting technique is based on gradient values of the respective pixels.

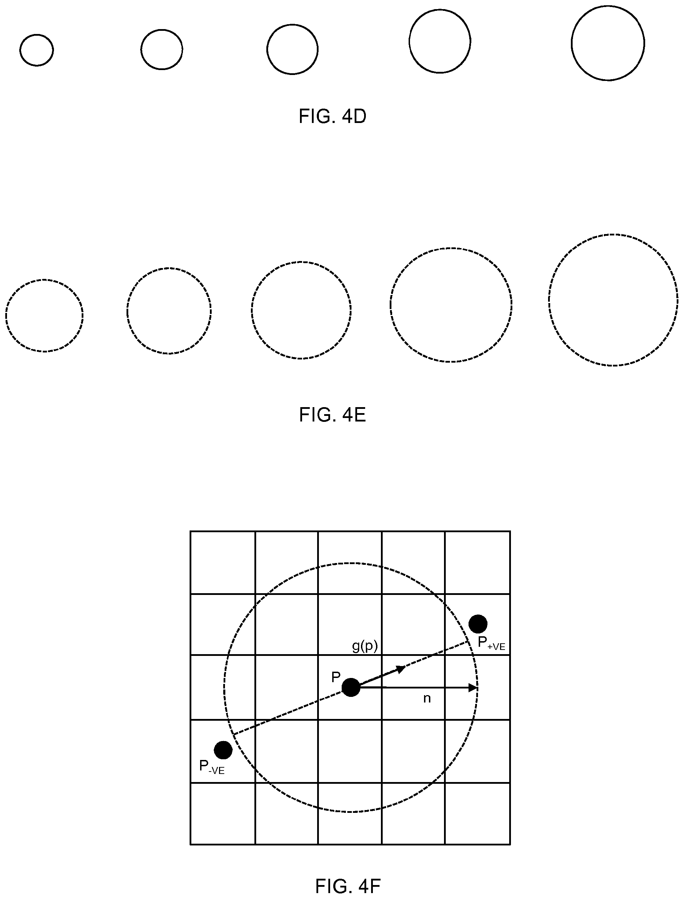

In an embodiment, detection of circles is performed for discrete values of circle radii for example, 10 such predefined radius values are considered. Circles that are in far region of field of view of the vehicle are searched in the first resolution image that is half resolution image whereas circles that are in near region of the field of view of the vehicle are searched in the second resolution image that is the quarter resolution image. FIG. 4D and 4E illustrate exemplary distribution of radii over first resolution image and second resolution image respectively. In context of an example, FIG. 4D illustrates circles belonging to half resolution image with radii h1, h2, h3, h4 and h5 and FIG. 4E illustrates circles belonging to quarter resolution image with radii q1,q2,q3,q4 and q5.

In an embodiment, horizontal and vertical edge images of the first resolution image and the second resolution image is considered as an input for the voting process. Gradient values between a particular range are considered such that gradient values above that range are rounded to higher threshold value while pixels with lower values are not considered. Orientation and magnitude of gradients are used in the voting process to cast votes to pixel positions.

In an embodiment, the voting process is performed for every discrete value of circle radii. Gradient values (both magnitude and direction) are obtained from the gradient image for every pixel position to determine two affected points. Two gradient affected points comprise a positively affected point and a negatively affected point, the positively affected point is at a distance of the radius in consideration along direction of gradient from a center point and the negatively affected point is at a distance of the radius in consideration opposite to direction of gradient at the center point.

FIG. 4F illustrates location of the center point (p) and its corresponding gradient affected positions (p+ve and p-ve) that are placed at a distance of n (radius) along and opposite to the direction of gradient at the center point. The locations of pixels p+ve and p-ve is affected by the gradient element g(p) for a range of n. The dotted circle shows all the pixels, which may be affected by the gradient at p for a range n.

In an embodiment, vote value based on gradient direction at each of the positively affected point and the negatively affected point of the at least two gradient affected points are incremented. Thus, vote value for the pixel and magnitude of the gradient for the pixelare considered for gradient affected locations. Vote value at the point (p+ve) along the gradient direction and point (p-ve) in the opposite direction are incremented. These changes are performed in the orientation projection image, On. Hence, it may be considered that:

$$On(p+ve(p))= On(p+ve(p))+1$$

$$On(p-ve(p))= On(p-ve(p))+1$$

In an embodiment, in a similar way gradient magnitude of the center point is added to each of the positively affected point and the negatively affected point.Thus, in the magnitude projection image Mn, the gradient magnitude of the center point p is stored. The gradient magnitude value ($\|g(p)\|$) gets added to the existing value in both positively and negatively affected positions.Hence, it may be considered that:

$$Mn(p+ve(p))= Mn(p+ve(p))+\|g(p)\|$$

$$Mn(p-ve(p))= Mn(p-ve(p))+ \|g(p)\|$$

In an embodiment, a Fast Radial Symmetry Transform (FRST) technique is implemented, where the radial symmetry contribution of the point p at the range n is given by:

$$Sn=Fn*An$$

Here the term Fn can be given by:

$$Fn(p)=\|On(p)\|^{(\alpha)}Mn(p)$$

Where, On(p) and Mn(p) contain normalized values of votes and gradient magnitudes. The term An denotes a Gaussian kernel that is applied to the image frame Fn to spread the influence of a pixel's symmetry contribution to its neighbors. The term $\alpha$ denotes radial strictness which is an inverse of sensitivity of the technique utilized to detect points of symmetry.

At block, 408 the circular object detection module 214performs election of circle centers. In an embodiment, values of pixels in the convoluted image frame Sn are considered for an election process. To select a point as a center position, a gradient affected position's value in the image frame Sn should be greater than a particular threshold value. The election process is repeated for all discrete values of radii in the first resolution image and the second resolution image.

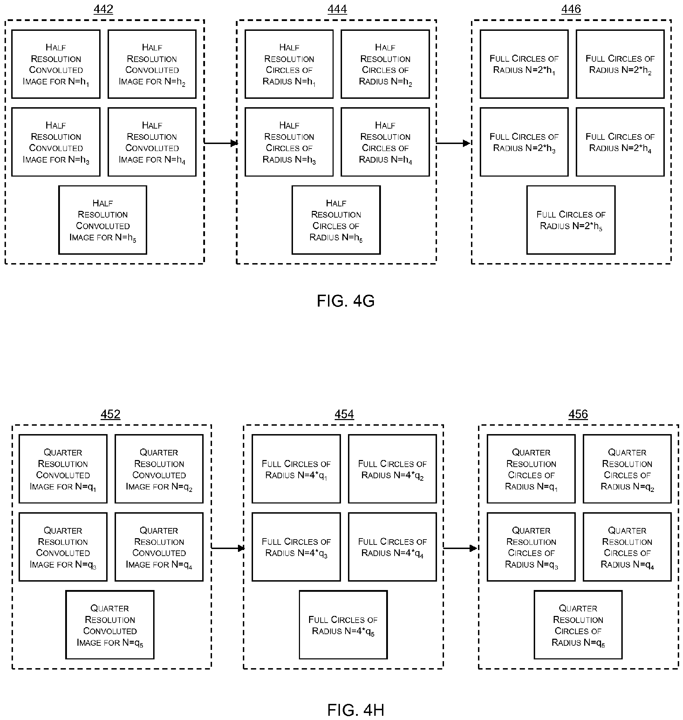

In an embodiment, after finding circle centers, their coordinates are remapped from the first resolution image and the second resolution image to the full resolution image that is the input image frame. FIG. 4G and 4H illustrate an overview of circle election process. As illustrated in FIG. 4G, for election process for first resolution image, value of pixels for sample values of radii h1 to h5 are considered in convoluted image at block 442, circles in half resolution is detected at block 444 and the circles are mapped in full resolution that pertains to input image frame at block 446.Referring to FIG. 4H, a similar procedure for circle selection is followed at blocks 452, 454 and 456 for election of circle centers for sample values of radii between q1 to q5 in the quarter resolution image.

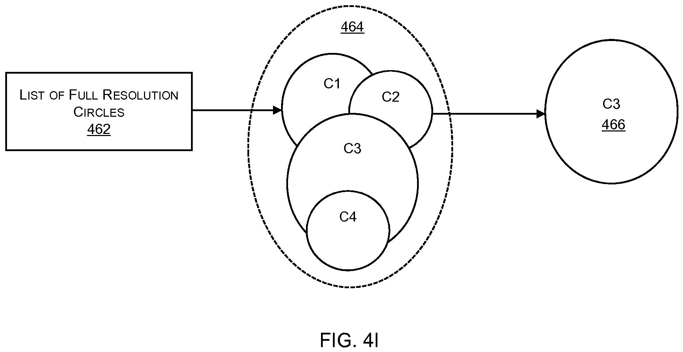

Those skilled in the art would appreciate that, as process for detection of circles is quite sensitive to points of symmetry, often more than one center point is selected for a circular object. Thus, multiple circles may be obtained for a single object. Therefore, the circular object detection module 214 at block 410 selects only one circle among overlapping circles. FIG. 4I illustrates an example for selecting one circle. As illustrated, a circle with largest radius value is chosen and for further processing. For example, among overlapping circles C1, C2, C3 and C4, circle C3, which is the circle with largest radius is chosen for further processing.

## Pre-Classification Module 216

In an embodiment, the pre-classification module 216 classifies and filters-out at least one false positive object contained in at least one image frame of the set of image frames, using a multi-stage pre-classifier.

According to an embodiment, the pre-classification module 216 receives image frames with detected circles and works on samples with a unique resolution. Irrespective of original resolution (Height x Width) of the input image frame with detected circles, the input image frame may be resized to a unique resolution e.g. (40x40) pixels before processing further.

In an example, the multi-stage pre classifier associated with the pre-classification module 216 comprises multiple stages for removal of false positive objects. Exemplary stages may comprise blue sign false positive removal, prohibitory sign false positive removal, no entry sign false positive removal, height/width sign false positive removal, weight sign false positive removal, Light Emitting Diode (LED) sign false positive removal and highway number false positive removal. Detection of false positive objects may be performed in the unique resolution for all stages of the multi-stage pre-classifier except highway number removal false positive removal, where samples may be processed in their original resolution.

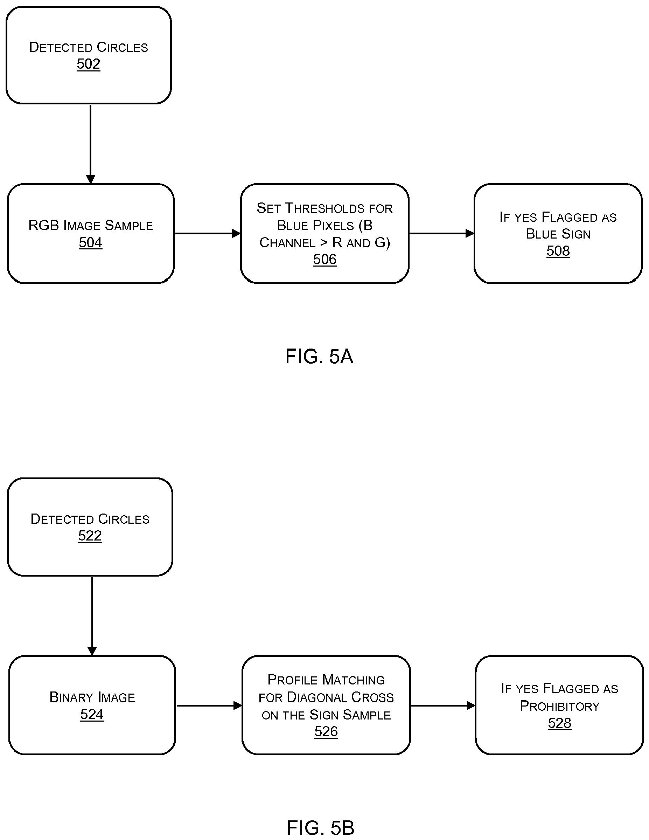

FIG. 5A illustrates an exemplary process for blue sign false positive removal in accordance with an embodiment of the present disclosure.

According to an embodiment, blue signs are removed by using RGB Sample at block 504 and corresponding RGB channel information. In an example, for the given pixel in the sample image frame if the intensity level has dominant blue channel information than the other two channels (represented at block 506), then the particular pixel is considered as a blue pixel and if the blue pixel count exceeds a threshold for that specific sample it will be considered as the blue sign sample (represented at block 508) and will be filtered out so that the sample is not tracked further.

FIG. 5B illustrates an exemplary process for prohibitory sign false positive removal in accordance with an embodiment of the present disclosure.

According to an embodiment, the prohibitory signs are removed by the use of binary images of the sign samples at bock524. Generally, the prohibitory signs have unique pattern, which is a diagonal cross that originates from the top right corner of the sign and terminates at the bottom left corner. The pre-classification module 216 checks this particular pattern for all sign samples at block 526 and if such a pattern is present in the sample it is considered as a prohibitory sign at block 528 and will be filtered out so that the sample is not tracked further.

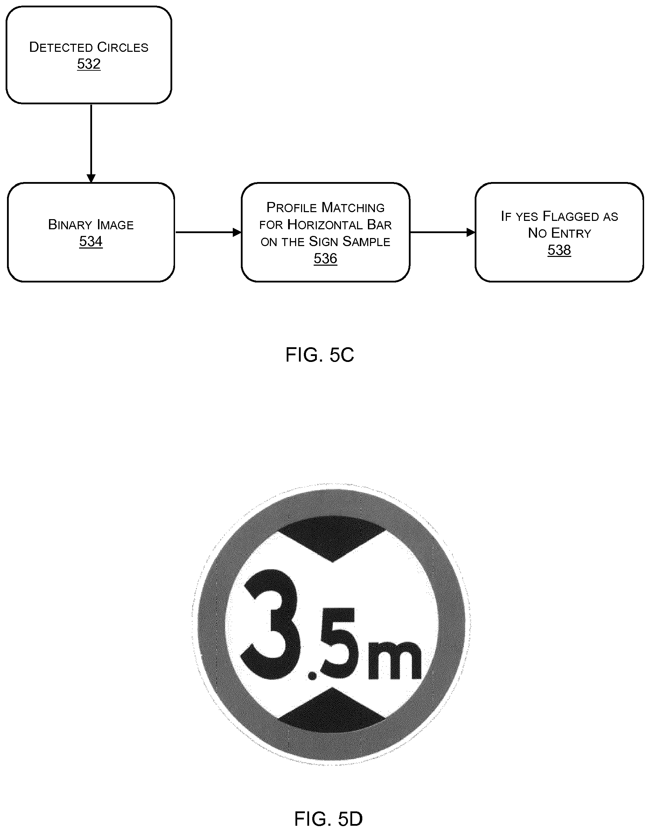

FIG. 5C illustrates an exemplary process for no entry sign false positive removal in accordance with an embodiment of the present disclosure.

According to an embodiment, no entry signs are removed by use of binary images of the sign samples at block 534. Generally, no entry sings have a unique pattern, which is a horizontal cross that originates from the left and terminates at the right. The pre-classification module 216inspects this particular pattern for all sign samples at block 536 and if found it is considered as no entry sign at block 538 and will be filtered out so that the sample is not tracked further.

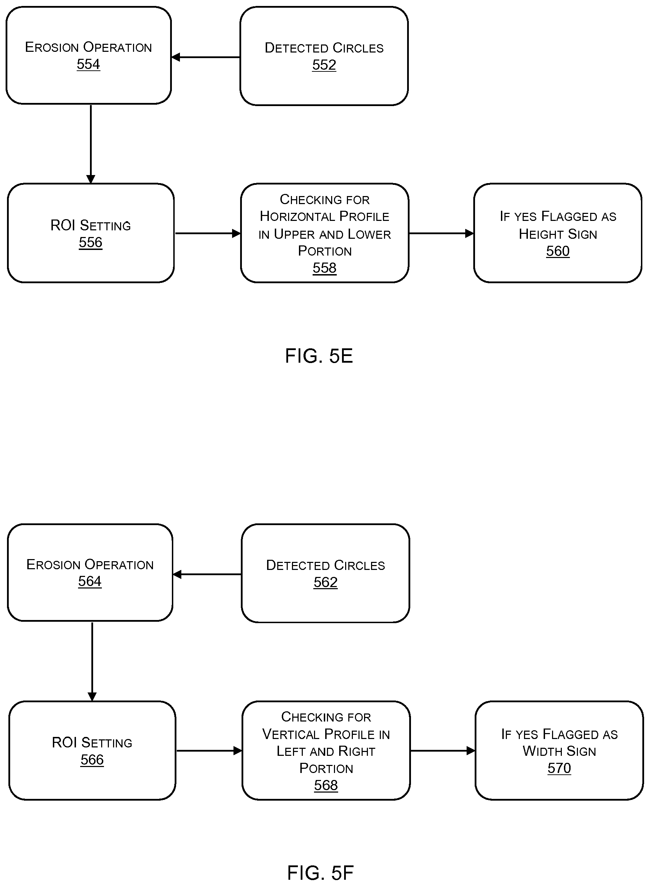

FIG. 5D illustrates an exemplary representation of a height sign and FIG. 5E illustrates an exemplary process for height sign false positive removal in accordance with an embodiment of the present disclosure.

As illustrated in FIG. 5D, the height signs have a unique pattern, which is a vertical notch appearing on the top-middle and bottom-middle portion of the image. According to an embodiment, height signs are removed by performing erosion operation on binary images of the sign samples at block 554.Further, at block 556, ROI is set such that the pre-classification module 216 inspects particular pattern of the height sign using horizontal profile analyzing technique at block 558by checking for a horizontal profile in upper and lower portion of the image. If the notches are present, then the particular sign sample is considered as height sign at block 560and will be filtered out so that the sample is not tracked further.

FIG. 5F illustrates an exemplary process for width sign false positive removal in accordance with an embodiment of the present disclosure.

According to an embodiment, width signs are removed by performing erosion operation on binary images of the sign samples at block 564. Generally, the width signs have a unique pattern, which is a horizontal notch appearing on the left and right portion of the image. At block 566, ROI is set such that the pre-classification module 216 inspects particular pattern of the width using vertical profile analyzing technique at block 568by checking vertical profile in left and right portion of the binary image. If the notches are present, then the particular sign sample is considered as width sign at block 570and will be filtered out so that the sample is not tracked further.

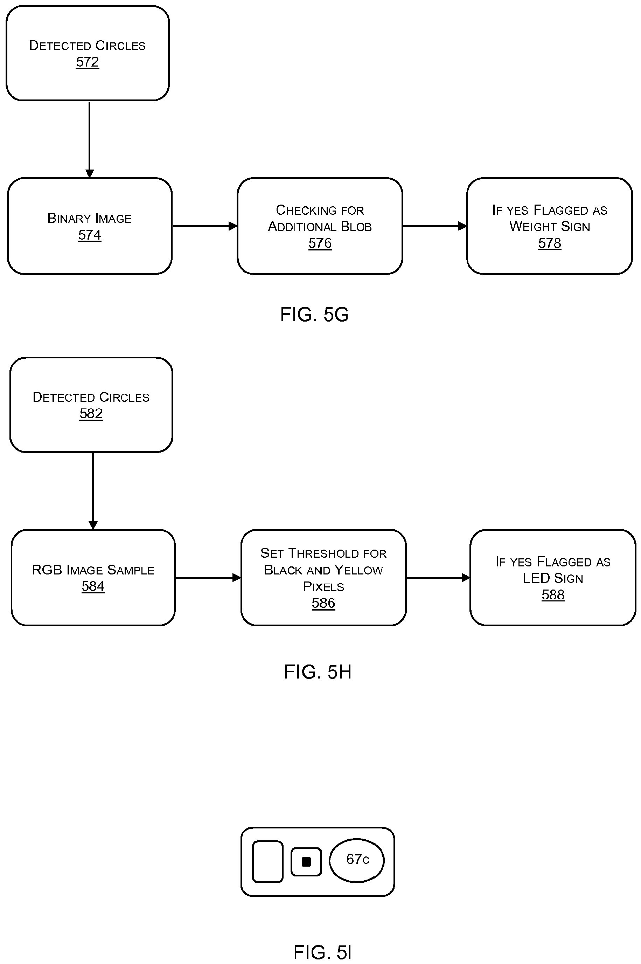

FIG. 5G illustrates an exemplary process for weight sign false positive removal in accordance with an embodiment of the present disclosure.

According to an embodiment, weight signs are removed by use of binary images of the sign samples at block 574.Generally, the weight signs have a unique blob which is a suffix "t" or "m" appearing on the bottom-right of the particular sign sample.The pre-classification module216 inspects this particular blob using connected component analysis at block 576 and if the blob is present then the particular sign sample is considered as weight sign at block 578and will be filtered out so that the sample is not tracked further.

FIG. 5H illustrates an exemplary process for LED sign false positive removal in accordance with an embodiment of the present disclosure.

According to an embodiment of the present disclosure, LED signs are removed by the use of color images of the sign samples at block 584. Generally, the LED Signs have rich black and yellow pixel information than the ordinary speed signs. The pre-classification module 216 inspects this particular pattern using color profile analyzing technique at block 586 and if the thresholds are met then the particular sign sample is considered as LED sign at block 588 and will be filtered out so that the sample is not tracked further.

FIG. 5I illustrates an exemplary representation of a highway number sign board in accordance with an embodiment of the present disclosure.

According to an embodiment, highway number sign boards are removed with set of heuristics that filter false positives based on the traffic sign's position in the image, horizontal and vertical gradient profiles, color information and a check for object overlap.

Thus, the pre-classification module 216 discards the image frames comprising a variety of traffic signs other than speed-limit traffic sign.

**Tracking Module 218**

In an embodiment, the tracking module 218 tracks the detected circular object based on determination of a state by analyzing detection of said circular object in each image frame of the set of image frames. The state is any of an idle state, a pre-track state, a tracking state and a cancel state, which is changed based on detection of the circular object in one or more consecutive image frames of the set of image frames.

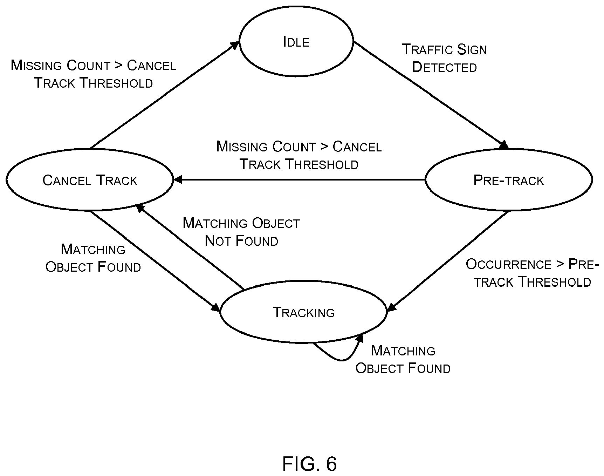

FIG. 6 illustrates a state machine to enable determination of a state of detected circular object by the tracking module 218.

According to an embodiment, a state machine is used to determine states of various objects and make various decisions accordingly. In an example, by default tracker is in the idle state and as soon as object is identified as potential traffic sign, a new instance of the tracker is started (if no previous matching Active tracker exists) and the state changed from idle to pre-track. In context of the present example, a pre-tracked object may be moved to the tracking state only if it has been detected more continuously for a predefined image frames e.g. 2 image frames. Further, if an object is not detected for some fixed amount of frames, the state changes from the pre-track to the cancel state.

In context of the present example, in tracking state a filter is utilized to estimate and update position of the detected circular object in the one or more consecutive image frames of the set of image frames. Thus, in tracking state continuous prediction and update is performed for tracked object using the filter e.g. a Kalman filter. If a tracked instance misses in a particular image frame, Kalman prediction may be used to display a bounding box. Further, if a particular object misses for more than a particular number of frames then it is moved from tracking state to the cancel state.

In an example, a typical Kalman tracker implemented in tracking state has two states viz. update state and prediction state. The update/measurement update state for a particular instance prevails when the object gets detected whereas the predict state comes into picture when a detection misses. The tracker uses bounding box coordinates of objects as parameters for tracking. Several matrices may be defined such as measurement, noise covariance, error covariance, primary transition and process noise covariance that aid in modeling uncertainties associated with motion of an object and noises. The matrices may be initialized with values as a result of experimentation. During the update state, covariance values get updated enabling the tracker to model motion of the object. Further, during the predict state, the Kalman tracker helps in estimating position of an object.

In an example, in the cancel state, if any match is found with detected objects then the object is moved to the tracking state. However, if no match is found and the object remains missing for a fixed amount of frames then the object is moved to idle state and the corresponding tracker instance is erased by the tracking module 218. The tracker data which is in active state and exits more than a fixed number of frames is displayed using the output unit 106.

## Traffic sign classification module 220

In an embodiment, the traffic sign classification module 220 detects at least one speed limit traffic sign based on the detected circular object by one or more classifiers using a Convolutional Neural Network (CNN).

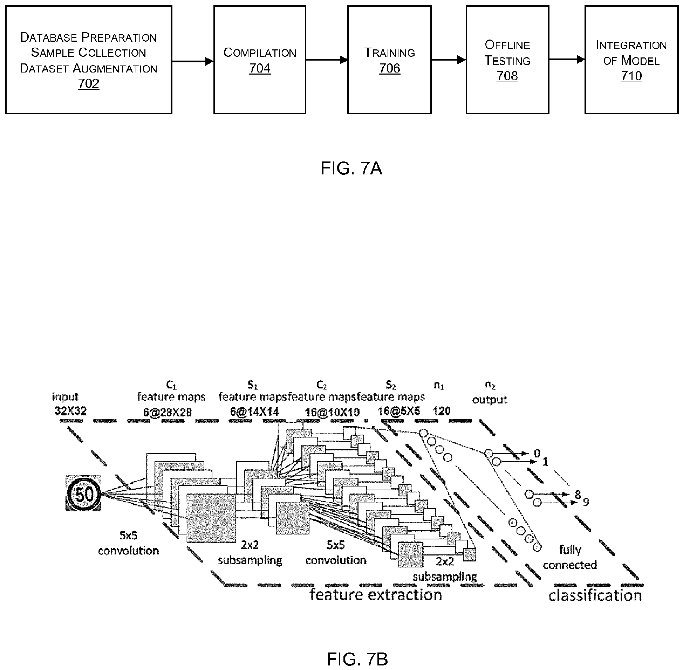

According to an example, detection and classification of speed signs is performed by a fully trainable CNN that learns a large dataset. Therefore, collection of a representative training dataset is very important because it largely impacts on recognition performance of the traffic sign classification module 220. FIG. 7A illustrates an exemplary process for training and testing CNN.

At block 702, a data set is prepared based on sample collection and dataset augmentation. In an embodiment, construction of an initial training dataset is performed by automated tool for collecting real-world images of the investigated speed sign classes on roads.

In an example, as color representations are not consistent between day and night conditions, the dataset is converted to grayscale images. Additionally, following factors may be considered for preparing a dataset:

1. Considering ranges between 21x21 pixels to 88x88 pixels.
2. Light intensity modification, pixel values multiplied by [0.8 0.9 1.0 1.1 1.2].
3. Shifting in x and y position [-2 -1 0 +1 +2] pixel positions.
4. Scaling the image [0.93 1 1.05].
5. Considering blurred and raining conditions.

In an embodiment, based on track i.e. set of images of the same physical sign, following factors may be considered for preparing a dataset:

1. Discarding tracks with less than 30 images.
2. Discarding classes with less than 9 tracks.
3. For the remaining tracks: If the track contains more than 30 images, equidistantly sample 30 images.

In an embodiment, once sample collection is completed dataset is divided in to 3parts:

1. Training Dataset: Containing 80% of samples.
2. Validation Dataset: Containing 15% of samples.
3. Testing Dataset: Containing 5% of samples.

In an embodiment, during dataset augmentation for training and validation, the raw dataset or the collected samples that are generated from the automated tool is segregated to remove false positives and foul samples. The segregated dataset may be augmented using Matlab\Python tool to prepare final dataset required for training and validation. An augmentation tool may translate, rotate and scale the input image and may output augmented dataset as follows:

1. Translation variation [-2 0 2] pixels.
2. Rotational Variation [-10 0 10] deg.
3. Scaling Variation [0.9 1 1.1] ratio.

At block 706, training is performed to learn coefficients of the CNN in on-line mode of error back-propagation as it scales well with large datasets of training data. Those skilled in the art would appreciate that the basic idea of error back-propagation is to efficiently calculate partial derivatives of output error in function of the weights for a given input pattern. These partial derivatives are used to perform small corrections to the weights to negative direction of the error derivatives.

In an embodiment, the input of the traffic sign classification module 220 is the raw pixel values of the detected circular objects and output is direct confidence values representing possibility of a speed sign. Usage of a fully trainable CNN enables the feature to modify the objects of interest by training with a set of example traffic sign images contained in the dataset.

According to an embodiment, the architecture of a CNN is characterized by many building blocks set by trial and error, but also constrained by the data. CNN are a biologically-inspired architecture that can learn invariant features and learn at each feature extraction stage. Multiple stages of features extraction provide hierarchical and robust representations to a multilayer classifier. Each stage of the classifier is composed of convolutions, non-linearities and sub-sampling. Nonlinearities used in traditional CNNs are the tanh () sigmoid function. However, more sophisticated non-linearities such as the rectified sigmoid and subtractive and divisive local normalizations are utilized, enforcing competition between neighboring features (both spatially and feature-wise). Outputs taken from multiple stages may also be combined to enrich features fed to the classifier with a multi-scale component.

FIG. 7B illustrates an exemplary CNN architecture according to an embodiment of the present disclosure.

Those skilled in the art would appreciate that the embodiments of the present disclosure utilizes a differentiating technique for collection and labeling of a large training dataset consisting of speed sign images, designing and off-line training of a CNN for a speed sign recognition application and mapping of the recognition algorithm to a graphics processing unit (GPU) that may perform real-time detection at 20-25 frames per second (fps).

In an example, the input images may be 32×32 in size with 1 Grayscale channel, Referring to FIG. 7B, CNN architecture used for training may be as follows:

1. Layer C1 is a convolution layer with 6 feature maps and a 5×5 kernel for each feature map.
2. Layer S1 is a sub-sampling layer with 6 feature maps and a 2×2 kernel for each feature map.
3. Layer C2 is a convolution layer with 16 feature maps and a 5×5 kernel for each feature map.
4. Layer S2 is a sub-sampling layer with 16 feature maps and a 2×2 kernel for each feature map.
5. Layer n1 is a convolution layer with 120 feature maps and a 5×5 kernel for each feature map.
6. Layer n2 is a fully connected layer additive bias and a tanh non-linearity is used after each layer.

It would be appreciated that, layers of the network C1 up to S2, function as a trainable feature extractor. All network layers contain neuron models as in a classical MultiLayer Perceptron (MLP) network. The feature extraction layers C1 up to S2 have specific constraints such as local connectivity and weight sharing and with these constraints the layers are able to extract position invariant features from two-dimensional shapes. Further, classification layers n1 and n2 at the output are fully connected MLPs. Classification layers utilizing the extracted local features perform classification of the input image.

In an embodiment, the CNN architecture comprise convolution layers, sub-sample layers and neuron layers. The feature maps of convolution layers, such as C1 and C2, contain neurons that take their synaptic inputs from a local receptive field, thereby detecting local features. The weights of the convolution neurons within a feature map are shared, so the position of the local feature becomes less important, thereby yielding shift invariance. The expression to compute a convolution neuron output may be defined by:

$$y[m,n] = b + \sum_{k=0}^{K-1}\sum_{l=0}^{K-1} v[k,l]x[m+k,n+l] \tag{1}$$

where, y refers to feature map output
m,n are position indices of the feature map
b is a trainable bias value
K refers to kernel size
v refers to convolution kernel
x refers to input image

The expression of equation (1) describes the convolution operation on input image x with convolution kernel v. The only difference with a standard convolution is the threshold value b which is added to obtained result.

In an embodiment, convolution layers are succeeded by a sub-sampling layer to perform a data reduction operation of the result of the convolution layers. The data reduction operation is performed by local averaging over a predefined, non-overlapping window. The size of the averaging window may be described by a sub-sample factor S. The expression for computation of a sub-sample neuron may be defined by:

$$y[m,n] = \phi(p) = \phi(b + u\sum_{k=0}^{S-1}\sum_{l=0}^{S-1} x[mS+k,nS+l]) \tag{2}$$

$$\phi(p) = \frac{1}{1+\exp(-p)} \qquad (3)$$

where, y refers to sub-sampled image
m,n are position indices of feature map
$\Phi(p)$ refers to sigmoid activation function
u is a trainable coefficient
S refer to sub-sampling factor
b refers to bias value
x refers to input feature map

In an embodiment, classification of the input image of the CNN is performed byneuron layers such as n1 and n2. In these layers, all neurons have a unique set of weights, which enables them to detect complex features and perform classification. The expression for the computation of a classical perceptron may be defined by:

$$y[n] = \phi(p) = \phi\left(b[n] + \sum_{k=0}^{K-1} w[n,k]x[k]\right) \qquad (4)$$

where, y refers to neuron layer output
n refers to position index
b refers to bias value
K refers to number of weights
w refers to weight matrix
x refers to previous layer input
$\Phi(p)$ refers to the sigmoid activation function

Those skilled in the art would appreciate that an important property of the CNN architecture is that all synaptic weights and bias values can be trained by cycling the simple and efficient stochastic mode of the error back-propagation algorithm through the training sample. Once the CNN are trained, offline testing is performed at block 708, such that when desired results on testing samples are achieved the CNN architecture is integrated for detecting speed limit traffic signs at block 710.

In an embodiment, based on detection and classification performed by using the above defined CNN architecture, the traffic sign classification module 220recognizes and labels the detected at least one speed limit traffic sign such that appropriate warnings can be produced at the output unit 106.

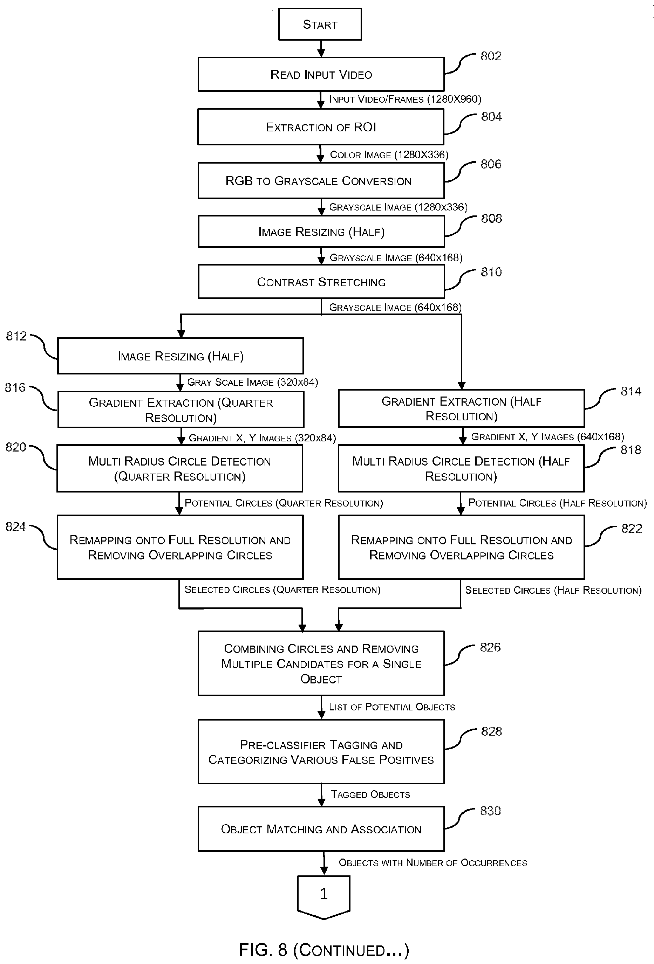

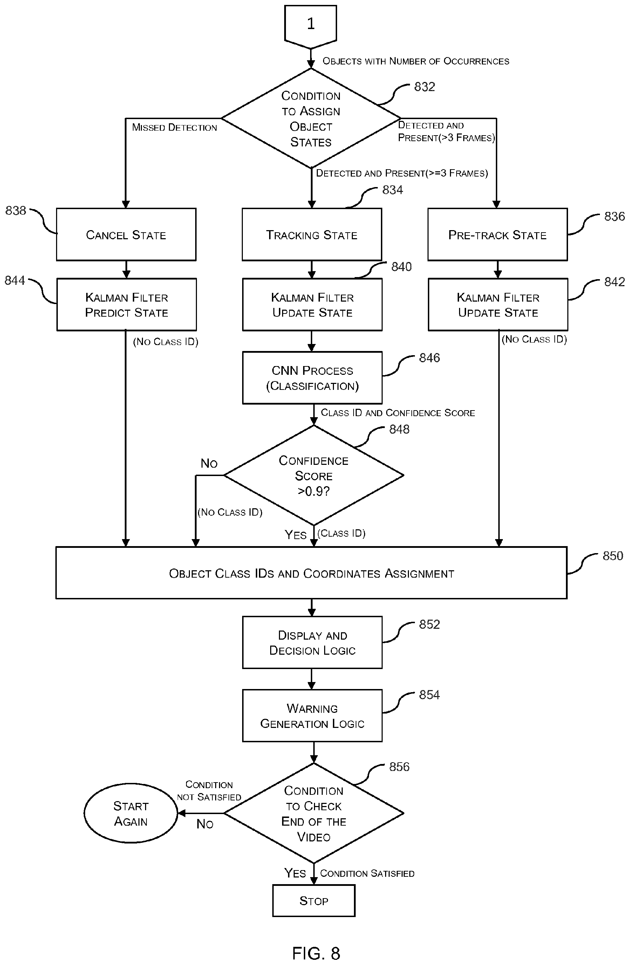

FIG. 8 illustrates a high-level flow diagram representing exemplary working of the proposed system in accordance with an embodiment of the present disclosure.

In an embodiment, at block 802, the pre-processing module 212 reads an input video that comprises a series of image frames captured by an image sensor. At block 804, an ROI is defined in image frame that may cover upper section of the received image. For example, the ROI for each image frame may be defined to cover upper 35% of image rows and all columns of the image frame. Thus, if the input image frame is of dimension(1280X960), the ROI may be defined of dimension(1280X336) covering upper section of the image frame. At block 808, the image frame may be converted into grayscale for further processing. At block 808, a first (e.g. half) resolution image is obtained by performing image resizing on the grayscale image. Thus, the grayscale image of dimension(1280X336)is converted to size grayscale image of dimension(640xl68). At block 810, contrast stretching is performed to ensure faster processing. The first resolution is further resized at block 812 to obtain second (e.g. quarter) resolution image that may be of the size (320x84).

In an embodiment, the circular object detection module 214 performs gradient extraction at blocks814 and 816 by obtaining gradient information of each of the first resolution image and the second resolution image, respectively. Further, at blocks818 and 820, multi-radius circles are detected from the first resolution image and the second resolution image respectively by performing a voting process/technique for one or more pre-defined radii for each of the first resolution image and the second resolution image. At blocks822 and 824, coordinates of circle centers are remapped from the first resolution image and the second resolution image respectively, to the full resolution image that is the input image frame. Further, as multiple circles may be obtained for a single object, one circle from overlapping circles may be selected from the first resolution image and the second resolution image, respectively. Further, at block 826, the circles in the full resolution image are combined such that multiple candidates for a single object are removed and only one circle pertaining to each object is obtained. At block 828, the pre-classification module 216 utilizes a multi stage-pre classifier to tag and classify various false positive objects such as blue sign, prohibitory sign, no entry sign, height/width sign, weight sign, Light Emitting Diode (LED) sign and highway number. Further, at block 830, object matching and association is performed to provide detected objects with number of occurrences.

In an embodiment, tracking module 218, checks the conditions to determine a state using a tracker by analyzing number of occurrences of the detected objects. The state may be a tracking state, a pre-track state, or a cancel state as represented at blocks 834, 836 and 838 respectively. Further the state may be an idle state which is the default state of the tracker. In an example, as soon as object is identified as potential traffic sign, a new instance of the tracker is started and the state changed from idle to pre-track. A predefined threshold of 3 image frames may be considered; thus, a pre-tracked object may be moved to the tracking state only if it has been detected more continuously for a predefined threshold of 3, at block 834. Also, if an object is not detected for some fixed amount of frames, the state may change to cancel state, at block 838. At blocks 840, 842 and 844 a filter e.g. Kalman filter is utilized to estimate and update position of the detected circular object.

In an embodiment, traffic sign classification module 220 detects the speed limit traffic sign using a Convolutional Neural Network (CNN), at block 846, to provide confidence score representing possibility of a speed sign and associated class ID. At block 848, it is determined whether the confidence score is greater than a threshold e.g. 0.9. If confidence score is greater than 0.9, class ID is provided to for object class ID and co-ordinate assignment at block 850. Further, all outputs from the tracker and the CNN may be utilized to assign class IDs and coordinates at block 850.

In an embodiment, at block 852, display and decision logic is utilized to provide warnings to the driver using warning generation logic at block 854. For example, a warning on detection of a speed limit traffic sign can be provided when the driver exceeds the speed limit. At block 856, a condition is checked to determine whether it is end of the video, for example, it may be determined whether detection is performed in last image frame of the video or series of image frames. If the detection is performed in the last image frame the process is stopped, conversely, the system may continue to perform detection in subsequent image frames.

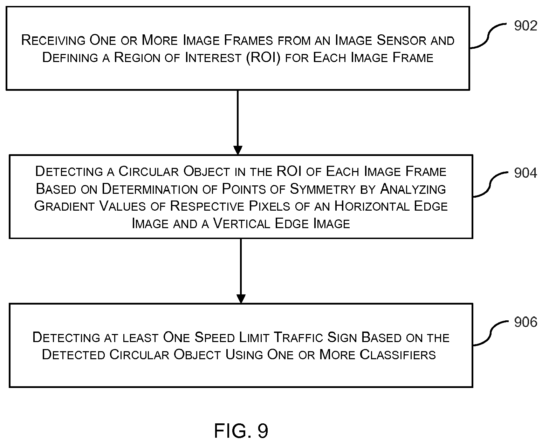

FIG. 9 illustrates a method of working of proposed system in accordance with an exemplary embodiment of the present disclosure.

In an aspect, the proposed method may be described in general context of computer executable instructions. Generally, computer executable instructions can include routines, programs, objects, components, data structures, procedures, modules, functions, etc., that perform particular functions or implement particular abstract data types. The method can also be practiced in a distributed computing environment where functions are performed by remote processing devices that are linked through a communications network. In a distributed computing environment, computer executable instructions may be located in both local and remote computer storage media, including memory storage devices.

The order in which the method as described is not intended to be construed as a limitation, and any number of the described method blocks may be combined in any order to implement the method or alternate methods. Additionally, individual blocks may be deleted from the method without departing from the spirit and scope of the subject matter described herein. Furthermore, the method may be implemented in any suitable hardware, software, firmware, or combination thereof. However, for ease of explanation, in the embodiments described below, the method may be considered to be implemented in the above described system.

In an aspect, present disclosure elaborates upon a method for recognition of traffic signs that comprises, at block 902, receiving one or more image frames from an image sensor operatively coupled with the vehicle and defining a Region of Interest (ROI) for each image frame of a set of image frames selected from said received one or more image frames. The ROI is defined based on a section of each image frame, and each ROI is resized to at least a first resolution image and a second resolution image.

In an aspect the method further comprises at block 904, detecting a circular object in the ROI of each image frame based on determination of points of symmetry by analyzing gradient values of respective pixels of a horizontal edge image and a vertical edge image. The horizontal edge image and the vertical edge image are obtained from each of the first resolution image and the second resolution image.

In an aspect, the method further comprises at block 906, detecting at least one speed limit traffic sign based on the detected circular object using one or more classifiers comprising a Convolutional Neural Network (CNN).

Those skilled in the art would appreciate that embodiments of the present disclosure utilize various novel features for recognition of traffic signs, for example, a multi-scale multi-radius object detector is optimized for embedded performance. The procedure of using multiple scales with overlapping radius ensures all circular objects of interest are detected and processing load is kept at a minimum. Apart from optimization, the approach also offers several advantages such as, the circle boundary in image frames become more uniform when resolution results in reduced size, the noise is reduced and change in resolution reduces the effect of traffic sign tilt to a considerable extent. For example, the system may even recognize the traffic signs when they are not exactly circular due to their orientation with respect to vehicle's camera or image sensor. Thus, the system is efficient to function even when there is higher possibility of such tilted traffic signs to get rejected when the traffic sign is very near.

Further, embodiments of the present disclosure utilize a unique voting process for circle detection as vote values are incremented in both positively and negatively affected positions of both projection images i.e. gradient projection image and magnitude projection image, which increases number of circular detections. Also, embodiments of the present disclosure use multi-resolution images as inputs to the pre-processing module to detect signs in far and near regions effectively (e.g. half resolution images and quarter resolution images are used as input to the circle circular object detection module 214) unlike the conventional techniques, which utilize multi-resolution images as inputs to the CNN.

Further, the embodiments of the present disclosure utilizes a multi-stage pre-classifier that filters out all the circular objects that are not of any interest and reduces the processing load on the classifier without losing the performance. The filtered signs are blue signs, prohibitory signs, no entry, height, width, weight, LED and highway number who have same shape but contain information other than speed limit signs. Furthermore, a state machine with tracker is utilized to ensure filtering of spurious circular objects formed in bushes and trees and only genuine circular objects are processed. Also, a multi-class classifier is utilized that uses CNN, which identifies different traffic signs with extremely high accuracy and can handle multiple traffic signs (e.g. 8 traffic signs) together in a frame without any performance loss and achieve a real-world performance of approximately 30 FPS on DSP.

Those skilled in the art would appreciate that as colors vary due to daylight and reflectance change, thresholds used by various techniques may not hold good for all scenarios, therefore, the embodiments of the present disclosure use a gradient based shape detection technique whose performance is minimally influenced by changes in lighting conditions. Further, unlike existing techniques that use shallow classifiers such as Support Vector Machine (SVM)that uses hand crafted features such as Histogram of Oriented Gradients (HOG), embodiments of the present disclosure utilize deep learning CNN architecture may perform both feature extraction and recognition.

It would be appreciated that numerous experiments have been conducted to verify results of various embodiments of the present disclosure. Table 1 represents exemplary experimental results obtained when system disclosed herein was utilized for detection and recognition of seven speed signs in roads under various conditions.

**Table 1: Experimental Results**

| Highway | | | | City road | | | |
|---|---|---|---|---|---|---|---|
| Sunny/Cloud | | Rainy/wet/fo ggy/snow | | Sunny/Cloud | | Rainy/wet/fo ggy/snow | |
| 21 Videos | | 15 Videos | | 61 Videos | | 6 Videos | |
| Sensitivity | Precision | Sensitivity | Precision | Sensitivity | Precision | Sensitivity | Precision |
| **92.05%** | **95.90%** | **80.02%** | **92.07%** | **91.91%** | **88.42%** | **82.84%** | **98.61%** |
| FPR | | FPR | | FPR | | FPR | |
| **0.002734456** | | **0.00485548** | | **0.012109451** | | **0.000555556** | |

As evident from Table 1, embodiments of the present disclosure provide high value of sensitivity and precision, thereby increasing efficiency and reliability.

As used herein, and unless the context dictates otherwise, the term "coupled to" is intended to include both direct coupling (in which two elements that are coupled to each other or in contact each other)and indirect coupling (in which at least one additional element is located between the two elements). Therefore, the terms "coupled to" and "coupled with" are used synonymously. Within the context of this document terms "coupled to" and "coupled with" are also used euphemistically to mean "communicatively coupled with" over a network, where two or more devices are able to exchange data with each other over the network, possibly via one or more intermediary device.

Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C ....and N, the text should be interpreted as requiring only one element from the group, not A plus N, or B plus N, etc.

While some embodiments of the present disclosure have been illustrated and described, those are completely exemplary in nature. The disclosure is not limited to the embodiments as elaborated herein only and it would be apparent to those skilled in the art that numerous modifications besides those already described are possible without departing from the inventive concepts herein. All such modifications, changes, variations, substitutions, and equivalents are completely within the scope of the present disclosure. The inventive subject matter, therefore, is not to be restricted except in the spirit of the appended claims.

**ADVANTAGES OF THE PRESENT DISCLOSURE**

The present disclosure provides a system and method for recognition of traffic signs.
The present disclosure provides a system and method for recognition of traffic signs, whose performance is minimally influenced by change in lighting conditions.
The present disclosure provides a system and method for recognition of traffic signs that utilizes techniques, which minimizes computational load on processor.
The present disclosure provides a system and method for recognition of traffic signs, which has a self learning capability.
The present disclosure provides a system and method for recognition of traffic signs, which enable filtering of spurious circular objects that may be formed in bushes and trees such that only genuine circular objects are processed.

**Claims**

1. A traffic sign recognition system implemented in a vehicle, said system comprising:

   an image sensor for imaging field of view of a vehicle driver; and
   a processor coupled with a memory, the memory storing instructions executable by the processor to:

   receive one or more image frames from the image sensor and define a Region of Interest (ROI) for each image frame, of a set of image frames selected from said received one or more image frames, wherein the ROI is defined based on a section of each image frame, and wherein each ROI is resized to at least a first resolution image and a second resolution image;
   detect a circular object in the ROI of each image frame based on determination of points of symmetry by analyzing gradient values of respective pixels of a horizontal edge image and a vertical edge image, the horizontal edge image and the vertical edge image being obtained from each of the first resolution image and the second resolution image; and
   detect at least one speed limit traffic sign based on the detected circular object using one or more classifiers using a Convolutional Neural Network (CNN).

2. The traffic sign recognition system of claim 1, wherein the processor classifies and filters-out at least one false positive object contained in at least one image frame of the set of image frames, using a multi-stage pre-classifier.

3. The traffic sign recognition system of claim 1, wherein the processor tracks the detected circular object based on determination of a state by analyzing detection of said circular object in each image frame of the set of image frames.

4. The traffic sign recognition system of claim 3, wherein the state is any of an idle state, a pre-track state, a tracking state and a cancel state, and wherein the state is changed from a first state to a second state based on detection of the circular object in one or more consecutive image frames of the set of image frames.

5. The traffic sign recognition system of claim 4, wherein a filter is utilized in the tracking state to estimate and update position of the detected circular object in the one or more consecutive image frames of the set of image frames.

6. The traffic sign recognition system of claim 1, wherein the first resolution image pertains to half of resolution of the ROI for effective detection of the at least one speed limit traffic sign in a far region and the second resolution image pertains to quarter of resolution of the ROI for effective detection of the at least one speed limit traffic sign in a near region.

7. The traffic sign recognition system of claim 1, wherein the processor detects the circular object by a multi-scale multi-radius circular object detector, and wherein said multi-scale multi-radius circular object detector utilizes a voting technique for one or more pre-defined radii for each of the first resolution image and the second resolution image, wherein the voting technique is based on gradient values of the respective pixels.

8. The traffic sign recognition system of claim 7, wherein the multi-scale multi-radius circular object detector facilitates detection using multiple scales with overlapping radii, of the one or more pre-defined radii, in order to effectively detect the circular object and minimize processing load.

9. The traffic sign recognition system of claim 7, wherein the voting technique is performed for at least one radius of the one or more pre-defined radii, by:

Obtaining gradient values of the respective pixels, each gradient value comprisinga gradient magnitude and a gradient direction;
determining at least two gradient affected points comprising a positively affected point and a negatively affected point, the positively affected point being at a distance of the at least one radius along direction of gradient from a center point and the negatively affected point being at a distance of the at least one radius opposite to direction of gradient at the center point;
incrementing a vote value based on gradient direction at each of the positively affected point and the negatively affected point of the at least two gradient affected points; and
adding gradient magnitude of the center point to each of the positively affected point and the negatively affected point.

10. The traffic sign recognition system of claim 1, wherein the processor recognizes and labels the detected at least one speed limit traffic sign.

11. A method, carried out according to instructions stored in a computer implemented in a vehicle, comprising:

receiving one or more image frames from an image sensor operatively coupled with the vehicle and defining a Region of Interest (ROI) for each image frame of a set of image frames selected from said received one or more image frames, wherein the ROI is defined based on a section of each image frame, and wherein each ROI is resized to at least a first resolution image and a second resolution image;
detecting a circular object in the ROI of each image frame based on determination of points of symmetry by analyzing gradient values of respective pixels of a horizontal edge image and a vertical edge image, the horizontal edge image and the vertical edge image being obtained from each of the first resolution image and the second resolution image; and
detecting at least one speed limit traffic sign based on the detected circular object using one or more classifiers comprising a Convolutional Neural Network (CNN).

100

FIG. 1

PROCESSING UNIT
104

PROCESSOR(S)
202

INTERFACE(S)
204

MEMORY
206

PROCESSING ENGINE(S)
208

PRE-PROCESSING MODULE
212

CIRCULAR OBJECT DETECTION
MODULE
214

PRE-CLASSIFICATION MODULE
216

TRACKING MODULE
218

TRAFFIC SIGN CLASSIFICATION
MODULE
220

OTHER MODULE(S)
222

DATA
210

FIG. 2

INPUT IMAGE
302

→

GRAY SCALE
CONVERSION
304

→

RESIZING
OPERATION
306

→

CONTRAST
STRETCHING
308

FIG. 3

PREPROCESSED INPUT 402 → GRADIENT EXTRACTION 404 → VOTING PROCESS 406 → ELECTION OF CIRCLE CENTERS 408 → RIGHT CIRCLE SELECTION 410

FIG. 4A

PREPROCESSED INPUT-HALF RESOLUTION 422 → SOBEL OPERATION 424 → HORIZONTAL EDGE IMAGE 426 / VERTICAL EDGE IMAGE 428

FIG. 4B

PREPROCESSED INPUT-QUARTER RESOLUTION 432 → SOBEL OPERATION 434 → HORIZONTAL EDGE IMAGE 436 / VERTICAL EDGE IMAGE 438

FIG. 4C

FIG. 4D

FIG. 4E

FIG. 4F

442

| HALF RESOLUTION CONVOLUTED IMAGE FOR $N=h_1$ | HALF RESOLUTION CONVOLUTED IMAGE FOR $N=h_2$ |
|---|---|
| HALF RESOLUTION CONVOLUTED IMAGE FOR $N=h_3$ | HALF RESOLUTION CONVOLUTED IMAGE FOR $N=h_4$ |
| HALF RESOLUTION CONVOLUTED IMAGE FOR $N=h_5$ | |

444

| HALF RESOLUTION CIRCLES OF RADIUS $N=h_1$ | HALF RESOLUTION CIRCLES OF RADIUS $N=h_2$ |
|---|---|
| HALF RESOLUTION CIRCLES OF RADIUS $N=h_3$ | HALF RESOLUTION CIRCLES OF RADIUS $N=h_4$ |
| HALF RESOLUTION CIRCLES OF RADIUS $N=h_5$ | |

446

| FULL CIRCLES OF RADIUS $N=2*h_1$ | FULL CIRCLES OF RADIUS $N=2*h_2$ |
|---|---|
| FULL CIRCLES OF RADIUS $N=2*h_3$ | FULL CIRCLES OF RADIUS $N=2*h_4$ |
| FULL CIRCLES OF RADIUS $N=2*h_5$ | |

FIG. 4G

452

| QUARTER RESOLUTION CONVOLUTED IMAGE FOR $N=q_1$ | QUARTER RESOLUTION CONVOLUTED IMAGE FOR $N=q_2$ |
|---|---|
| QUARTER RESOLUTION CONVOLUTED IMAGE FOR $N=q_3$ | QUARTER RESOLUTION CONVOLUTED IMAGE FOR $N=q_4$ |
| QUARTER RESOLUTION CONVOLUTED IMAGE FOR $N=q_5$ | |

454

| FULL CIRCLES OF RADIUS $N=4*q_1$ | FULL CIRCLES OF RADIUS $N=4*q_2$ |
|---|---|
| FULL CIRCLES OF RADIUS $N=4*q_3$ | FULL CIRCLES OF RADIUS $N=4*q_4$ |
| FULL CIRCLES OF RADIUS $N=4*q_5$ | |

456

| QUARTER RESOLUTION CIRCLES OF RADIUS $N=q_1$ | QUARTER RESOLUTION CIRCLES OF RADIUS $N=q_2$ |
|---|---|
| QUARTER RESOLUTION CIRCLES OF RADIUS $N=q_3$ | QUARTER RESOLUTION CIRCLES OF RADIUS $N=q_4$ |
| QUARTER RESOLUTION CIRCLES OF RADIUS $N=q_5$ | |

FIG. 4H

464

LIST OF FULL RESOLUTION
CIRCLES
462

C1

C2

C3

C4

C3
466

FIG. 4I

DETECTED CIRCLES
502

RGB IMAGE SAMPLE
504

SET THRESHOLDS FOR
BLUE PIXELS (B
CHANNEL > R AND G)
506

IF YES FLAGGED AS
BLUE SIGN
508

FIG. 5A

DETECTED CIRCLES
522

BINARY IMAGE
524

PROFILE MATCHING
FOR DIAGONAL CROSS
ON THE SIGN SAMPLE
526

IF YES FLAGGED AS
PROHIBITORY
528

FIG. 5B

```
┌─────────────────┐
│ DETECTED CIRCLES │
│      532         │
└─────────────────┘
         │
         ▼
┌─────────────────┐     ┌──────────────────┐     ┌──────────────────┐
│  BINARY IMAGE   │────▶│ PROFILE MATCHING │────▶│ IF YES FLAGGED AS│
│      534        │     │ FOR HORIZONTAL BAR│     │    NO ENTRY      │
│                 │     │ ON THE SIGN SAMPLE│     │      538         │
│                 │     │       536        │     │                  │
└─────────────────┘     └──────────────────┘     └──────────────────┘
```

FIG. 5C

FIG. 5D

EROSION OPERATION
554

DETECTED CIRCLES
552

ROI SETTING
556

CHECKING FOR
HORIZONTAL PROFILE
IN UPPER AND LOWER
PORTION
558

IF YES FLAGGED AS
HEIGHT SIGN
560

FIG. 5E

EROSION OPERATION
564

DETECTED CIRCLES
562

ROI SETTING
566

CHECKING FOR
VERTICAL PROFILE IN
LEFT AND RIGHT
PORTION
568

IF YES FLAGGED AS
WIDTH SIGN
570

FIG. 5F

```
┌─────────────────────┐
│  DETECTED CIRCLES   │
│        572          │
└─────────────────────┘
           │
           ▼
┌─────────────────┐      ┌─────────────────┐      ┌─────────────────┐
│  BINARY IMAGE   │ ───▶ │   CHECKING FOR  │ ───▶ │ IF YES FLAGGED AS│
│      574        │      │ ADDITIONAL BLOB │      │   WEIGHT SIGN   │
│                 │      │      576        │      │      578        │
└─────────────────┘      └─────────────────┘      └─────────────────┘
```

FIG. 5G

```
┌─────────────────────┐
│  DETECTED CIRCLES   │
│        582          │
└─────────────────────┘
           │
           ▼
┌─────────────────┐      ┌─────────────────┐      ┌─────────────────┐
│ RGB IMAGE SAMPLE│ ───▶ │  SET THRESHOLD FOR│ ──▶ │ IF YES FLAGGED AS│
│      584        │      │ BLACK AND YELLOW │      │    LED SIGN     │
│                 │      │     PIXELS       │      │      588        │
│                 │      │      586         │      │                 │
└─────────────────┘      └─────────────────┘      └─────────────────┘
```

FIG. 5H

FIG. 5I

FIG. 6

FIG. 7A

FIG. 7B

START

↓

READ INPUT VIDEO ⟋ 802

↓ INPUT VIDEO/FRAMES (1280X960)

EXTRACTION OF ROI ⟋ 804

↓ COLOR IMAGE (1280X336)

RGB TO GRAYSCALE CONVERSION ⟋ 806

↓ GRAYSCALE IMAGE (1280x336)

IMAGE RESIZING (HALF) ⟋ 808

↓ GRAYSCALE IMAGE (640x168)

CONTRAST STRETCHING ⟋ 810

↓ GRAYSCALE IMAGE (640x168)

812 ⟋ IMAGE RESIZING (HALF)

↓ GRAY SCALE IMAGE (320x84)

816 ⟋ GRADIENT EXTRACTION (QUARTER RESOLUTION)

814 ⟋ GRADIENT EXTRACTION (HALF RESOLUTION)

↓ GRADIENT X, Y IMAGES (320x84)    ↓ GRADIENT X, Y IMAGES (640x168)

820 ⟋ MULTI RADIUS CIRCLE DETECTION (QUARTER RESOLUTION)

MULTI RADIUS CIRCLE DETECTION (HALF RESOLUTION) ⟋ 818

↓ POTENTIAL CIRCLES (QUARTER RESOLUTION)    ↓ POTENTIAL CIRCLES (HALF RESOLUTION)

824 ⟋ REMAPPING ONTO FULL RESOLUTION AND REMOVING OVERLAPPING CIRCLES

REMAPPING ONTO FULL RESOLUTION AND REMOVING OVERLAPPING CIRCLES ⟋ 822

SELECTED CIRCLES (QUARTER RESOLUTION)    SELECTED CIRCLES (HALF RESOLUTION)

COMBINING CIRCLES AND REMOVING MULTIPLE CANDIDATES FOR A SINGLE OBJECT ⟋ 826

↓ LIST OF POTENTIAL OBJECTS

PRE-CLASSIFIER TAGGING AND CATEGORIZING VARIOUS FALSE POSITIVES ⟋ 828

↓ TAGGED OBJECTS

OBJECT MATCHING AND ASSOCIATION ⟋ 830

↓ OBJECTS WITH NUMBER OF OCCURRENCES

1

FIG. 8 (CONTINUED...)

1

OBJECTS WITH NUMBER OF OCCURRENCES

832

CONDITION TO ASSIGN OBJECT STATES

MISSED DETECTION

DETECTED AND PRESENT(>3 FRAMES)

DETECTED AND PRESENT(>=3 FRAMES)

834

838

CANCEL STATE

TRACKING STATE

840

PRE-TRACK STATE

836

844

KALMAN FILTER PREDICT STATE

(NO CLASS ID)

KALMAN FILTER UPDATE STATE

KALMAN FILTER UPDATE STATE

842

(NO CLASS ID)

CNN PROCESS (CLASSIFICATION)

846

CLASS ID AND CONFIDENCE SCORE

848

No

CONFIDENCE SCORE >0.9?

(NO CLASS ID)

YES (CLASS ID)

OBJECT CLASS IDs AND COORDINATES ASSIGNMENT

850

DISPLAY AND DECISION LOGIC

852

WARNING GENERATION LOGIC

854

856

CONDITION NOT SATISFIED

START AGAIN

No

CONDITION TO CHECK END OF THE VIDEO

YES CONDITION SATISFIED

STOP

FIG. 8

RECEIVING ONE OR MORE IMAGE FRAMES FROM AN IMAGE SENSOR AND
DEFINING A REGION OF INTEREST (ROI) FOR EACH IMAGE FRAME — 902

DETECTING A CIRCULAR OBJECT IN THE ROI OF EACH IMAGE FRAME
BASED ON DETERMINATION OF POINTS OF SYMMETRY BY ANALYZING
GRADIENT VALUES OF RESPECTIVE PIXELS OF AN HORIZONTAL EDGE
IMAGE AND A VERTICAL EDGE IMAGE — 904

DETECTING AT LEAST ONE SPEED LIMIT TRAFFIC SIGN BASED ON THE
DETECTED CIRCULAR OBJECT USING ONE OR MORE CLASSIFIERS — 906

FIG. 9

Europäisches Patentamt

European Patent Office

Office européen des brevets

# EUROPEAN SEARCH REPORT

Application Number

EP 18 19 0801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DI ZANG ET AL: "Traffic sign detection based on cascaded convolutional neural networks", 2016 17TH IEEE/ACIS INTERNATIONAL CONFERENCE ON SOFTWARE ENGINEERING, ARTIFICIAL INTELLIGENCE, NETWORKING AND PARALLEL/DISTRIBUTED COMPUTING (SNPD), 30 May 2016 (2016-05-30), pages 201-206, XP55569513, DOI: 10.1109/SNPD.2016.7515901 ISBN: 978-1-5090-2239-7 * section II and III; figures 2-7 * | 1-11 | INV. G06K9/00 G06K9/46 G06K9/62 G06K9/32 |
| A | SAMUELE SALTI ET AL: "Traffic sign detection via interest region extraction", PATTERN RECOGNITION., vol. 48, no. 4, 9 June 2014 (2014-06-09), pages 1039-1049, XP55569527, GB ISSN: 0031-3203, DOI: 10.1016/j.patcog.2014.05.017 * section 3; figures 1-4 * | 1-11 | |
| A | YINGYING ZHU ET AL: "Traffic sign detection and recognition using fully convolutional network guided proposals", NEUROCOMPUTING, vol. 214, 20 July 2016 (2016-07-20), pages 758-766, XP55569533, AMSTERDAM, NL ISSN: 0925-2312, DOI: 10.1016/j.neucom.2016.07.009 * section 3; figures 1-4 * | 1-11 | TECHNICAL FIELDS SEARCHED (IPC) G06K |

-/--

The present search report has been drawn up for all claims

| Place of search | Date of completion of the search | Examiner |
|---|---|---|
| The Hague | 18 March 2019 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 19 0801

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUAN YUAN ET AL: "An Incremental Framework for Video-Based Traffic Sign Detection, Tracking, and Recognition", IEEE TRANSACTIONS ON INTELLIGENT TRANSPORTATION SYSTEMS, IEEE, PISCATAWAY, NJ, USA, vol. 18, no. 7, 1 July 2017 (2017-07-01), pages 1918-1929, XP011654388, ISSN: 1524-9050, DOI: 10.1109/TITS.2016.2614548 [retrieved on 2017-06-23] * section III-B * | 1-11 | |

TECHNICAL FIELDS
SEARCHED        (IPC)

The present search report has been drawn up for all claims

| Place of search | Date of completion of the search | Examiner |
|---|---|---|
| The Hague | 18 March 2019 | Atmatzidis, Lazaros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)